Europäisches Patentamt

European Patent Office

Office européen des brevets

(11) Numéro de publication: **0 167 815**
**A1**

(12) ## DEMANDE DE BREVET EUROPEEN

(21) Numéro de dépôt: 85106870.0

(22) Date de dépôt: 04.06.85

(51) Int. Cl.⁴: **H 02 G 1/08**

(30) Priorité: 08.06.84 FR 8409030

(43) Date de publication de la demande:
15.01.86 Bulletin 86/3

(84) Etats contractants désignés:
BE DE FR GB IT

(71) Demandeur: LIGNES TELEGRAPHIQUES ET
TELEPHONIQUES L.T.T.
1, rue Charles Bourseul
F-78702 Conflans-Ste-Honorine(FR)

(72) Inventeur: Hoebe Ke, Jean-Claude
4, allée des Narcisses
F-95520 Osny(FR)

(72) Inventeur: Bujanowiez, Luc
49, rue Charles Peguy
F-95150 Taverny(FR)

(72) Inventeur: Schiehle, Philippe
37, avenue du Maréchal Galliéni
F-78700 Conflans-Sainte-Honorine(FR)

(74) Mandataire: Weinmiller, Jürgen et al,
Zeppelinstrasse 63
D-8000 München 80(DE)

(54) **Dispositif distributeur de microbilles pour le tirage d'un cable dans une conduite.**

(57) L'invention concerne un dispositif distributeur de microbilles pour le tirage d'un câble dans une conduite, placé à l'embouchure de celui-ci et comportant un réservoir (3) en deux parties supérieure (1) et inférieure (2) jointives au niveau de deux de leurs bords (5 et 6) et détachables au niveau de leurs deux autres bords (4 et 7), ce réservoir comportant une première ouverture (11) adaptable à la conduite et une deuxième ouverture par où entre le câble et comportant de plus un orifice (13) servant au versement des microbilles sur le câble.

FIG_3

EP 0 167 815 A1

- 1 -

# DISPOSITIF DISTRIBUTEUR DE MICROBILLES POUR
# LE TIRAGE D'UN CABLE DANS UNE CONDUITE

La présente invention concerne un dispositif distributeur de microbilles destiné au tirage d'un câble dans une conduite.

Le procédé de pose d'un câble par tirage dans une conduite se heurte au problème de l'effort important de tirage à exercer à l'extrémité du câble, effort qui est déterminé par les frottements existant entre l'enveloppe extérieure du câble et la paroi intérieure de la conduite. Ce problème est particulièrement difficile à résoudre dans le cas de la pose d'un câble de télécommunications par fibres optiques dont les propriétés sont susceptibles d'être affectées par les contraintes au cours du tirage. En effet, il faut réaliser un compromis entre la longueur du câble à poser et l'effort de traction supporté par le câble, lequel augmente avec la longueur du câble à poser.

Une solution connue pour réduire les frottements entre le câble et la conduite consiste en un graissage de la paroi intérieure de la conduite dans laquelle se meut le câble. Cette solution n'est pas entièrement satisfaisante dans la mesure où la diminution du coefficient de frottement est en partie compensée par l'effet d'adhésion du câble à la conduite, dû à la graisse.

Une autre solution connue, décrite dans la demande de brevet français publiée sous le numéro 2.501.927, consiste à déposer un tapis de microbilles entre les surfaces extérieure du câble et intérieure de la conduite en déplacement relatif lors du tirage. Le câble ne glisse plus dans la conduite mais roule sur des microbilles qui sont mises en place par un dispositif d'injection pneumatique. Ce dispositif présente l'inconvénient de nécessiter un système d'arrivée d'air sous pression pour propulser les billes à l'intérieur de la conduite et d'empêcher la présence de microbilles à l'entrée de la conduite, celles-ci étant propulsées trop loin.

Le but de la présente invention est de pallier ces divers inconvénients et son objet est un dispositif distributeur de microbilles pour le tirage d'un câble dans une conduite, placé à l'embouchure de la conduite et à travers laquelle va être tiré le câble, comportant un réservoir composé de deux parties, supérieure et inférieure, symétriques par rapport au plan horizontal passant par l'axe longitudinal du câble et jointives au niveau de leurs bords horizontaux respectifs, deux de ces bords étant solidaires tandis que les deux autres bords sont détachables, ce réservoir comportant une première ouverture située en regard de l'embouchure de la conduite et dont le diamètre est adapté à celui de la conduite et une deuxième ouverture par laquelle entre le câble et dont le diamètre est adapté à celui du câble, et la partie supérieure du réservoir comportant un orifice de diamètre variable, destiné à assurer le versement des microbilles sur le câble selon un débit déterminé.

Ce dispositif présente l'avantage d'une distribution continue de microbilles suivant un débit adapté et d'une récupération des microbilles non utilisées.

D'autres caractéristiques et avantages de l'invention apparaîtront dans la description qui suit, donnée à titre d'exemple non limitatif et illustrée par les figures qui représentent respectivement :

- la figure 1 : une vue en coupe longitudinale du dispositif distributeur selon l'invention ;
- la figure 2 : une vue en coupe transversale du dispositif selon l'invention ;
- la figure 3 : une vue du dispositif adapté à une conduite dans laquelle est tiré un câble.

Les éléments portant les mêmes références dans les différentes figures remplissent les mêmes fonctions en vue des mêmes résultats.

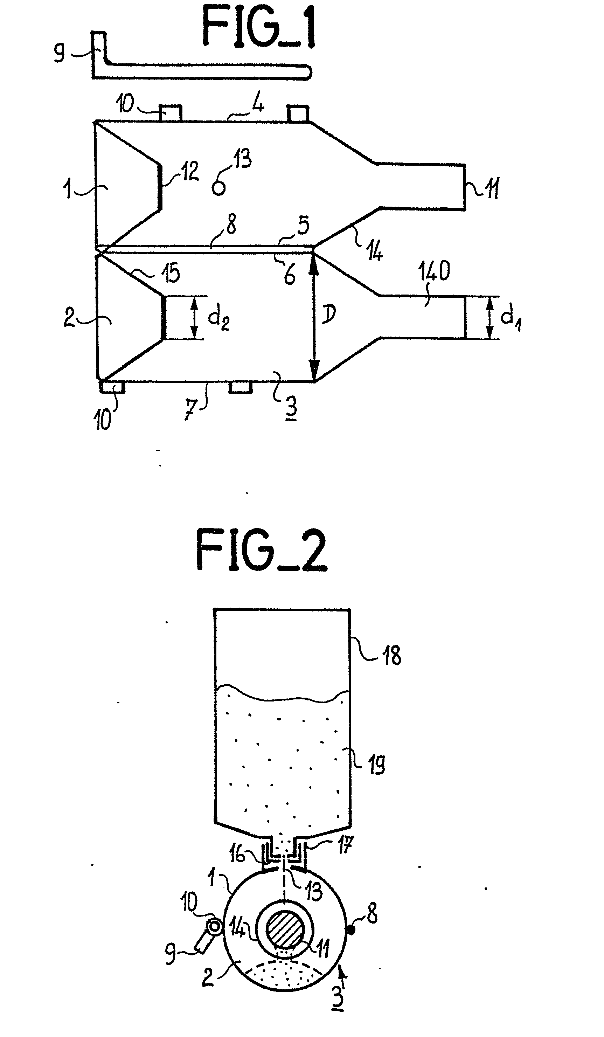

Le dispositif distributeur de microbilles selon l'invention pour le tirage d'un câble dans une conduite, placé à l'embouchure de la conduite et à travers laquelle le câble va être tiré comporte un réservoir en deux parties représentées en coupe longitudinale sur la figure 1.

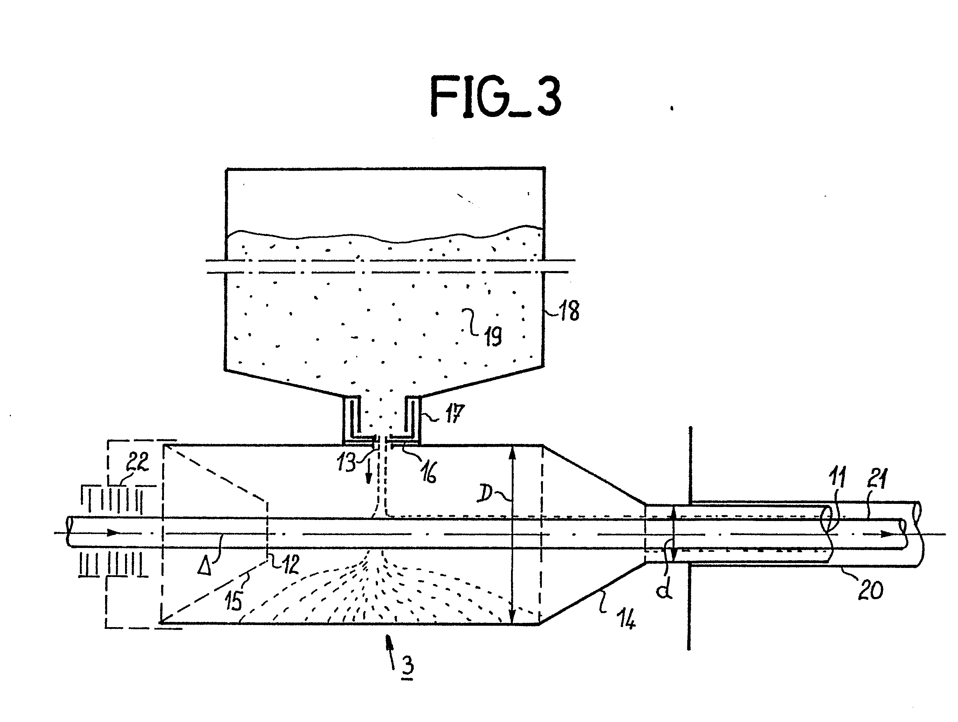

Les deux parties 1 et 2 du réservoir 3 sont symétriques par rapport au plan horizontal passant par l'axe longitudinal $\Delta$ (fig. 3) du câble devant être tiré. Ce réservoir 3 étant fermé hermétiquement, ces deux parties, l'une 1 supérieure et l'autre 2 inférieure par rapport au plan horizontal, sont jointives au niveau de leurs deux bords horizontaux respectifs (4 et 5) et (6 et 7) ; mais ce réservoir est susceptible d'être ouvert - pour l'enlever aisément une fois le câble introduit dans la conduite -, de sorte que les deux parties 1 et 2 sont détachables selon un de leurs bords respectifs 4 et 7, leurs autres bords 5 et 6 restant solidaires. Dans un exemple particulier, les bords 5 et 6 sont maintenus solidaires au moyen d'une articulation ou charnière 8 et les autres bords 4 et 7 peuvent être attachés l'un à l'autre au moyen d'une tirette 9 coulissant dans des encoches 10 pratiquées le long de la paroi extérieure des deux parties 1 et 2 du réservoir 3.

Ce réservoir 3 comporte une première ouverture 11 située en regard de l'embouchure de la conduite et dont le diamètre $d_1$ est adapté à celui de cette dernière. Il comporte également une deuxième ouverture 12 par laquelle entre le câble avant d'être introduit dans la conduite, et dont le diamètre $d_2$ est adapté à celui du câble.

Enfin, la partie supérieure 1 du réservoir 3 comporte un orifice 13 de diamètre variable par lequel vont être versées les microbilles selon un débit choisi.

Sur les trois figures de la description représentant un exemple de réalisation non limitatif, le réservoir 3 est de forme cylindrique, de diamètre D supérieur à celui des deux ouvertures 11 et 12. Il présente deux transitions 14 et 15 aboutissant chacune à une des deux ouvertures 11 et 12 respectivement. Les transitions sont de forme tronconique par exemple, dont le diamètre le plus petit est situé soit vers l'extérieur du réservoir 3 - cas de la transition 14 - soit vers l'intérieur de réservoir 3 - cas de la transition 15 - . Dans le cas de la transition 14 aboutissant à l'ouverture 11 placée en regard de l'embouchure de la conduite, cette transition 14 peut se composer d'une première partie tronconique et d'une seconde partie 140 cylindrique, de diamètre $d_1$, destinée à être introduite dans l'embouchure de la conduite. Grâce à cette partie cylindrique 140, le dispositif distributeur selon l'invention est maintenu simplement dans l'axe de la conduite.

La figure 2 montre une vue en coupe transversale du réservoir 3 selon l'invention, les deux parties 1 et 2 le composant étant jointives pour rendre le réservoir 3 hermétique. Au niveau de l'orifice 13 par lequel sont tombées les microbilles, on peut placer des rondelles trouées 16, dont le diamètre du trou est variable, dans une cornière 17 dont la forme est adaptée à une réserve 18 de microbilles 19 destinées à être versées dans le dispositif selon l'invention. Cette réserve 18 peut être par exemple une bouteille dont le goulot est cylindrique de sorte que la forme la plus adaptée de la cornière doit être aussi cylindrique. Cette réserve 18 sera avantageusement transparente pour en contrôler le niveau des microbilles.

La figure 3 montre une vue du dispositif distributeur selon l'invention adapté à une conduite 20 dans laquelle un câble 21 doit être tiré. Ce câble est entré dans le réservoir 3 par l'ouverture 12 et en sort par l'ouverture 11 dont le diamètre $\underline{d}$ est adapté à celui de la conduite 20. Une réserve 18 est placée au-dessus de l'orifice 13 d'écoulement des microbilles 19.

Le fonctionnement du dispositif distributeur selon l'invention est le suivant. L'orifice 13 pratiqué dans la partie supérieure 1 du réservoir 3 laisse s'écouler, selon un débit déterminé par son diamètre, les microbilles 19 conservées dans la réserve 18. Ces microbilles sont généralement en matériau synthétique, notamment en polyamide ou polyéthylène, de diamètre très inférieur à celui du câble à tirer, de l'ordre du dixième de millimètre. Ces billes étant en matériau isolant, elles adhèrent sur l'enveloppe du câble qui est aussi généralement du polyéthylène, grâce à la présence d'électricité statique sur l'enveloppe isolante du câble. Cette électricité statique existe par le fait même de la circulation du câble dans le réservoir 3, mais on peut l'augmenter en adjoignant les brosses 22 en matériau isolant à l'entrée de l'ouverture 12 du réservoir.

Cette électricité statique fait que les microbilles 20 s'écoulant de l'orifice 13 adhérent sur la partie supérieure de l'enveloppe du câble 21 et des microbilles tombées au fond du réservoir 3 sont attirées sur la partie inférieure de cette même enveloppe. Pour éviter d'endommager l'enveloppe du câble, le matériau constituant les microbilles est plus tendre que celui composant l'enveloppe.

Le dispositif distributeur de microbilles, selon l'invention, présente un certain nombre d'avantages notamment celui d'un revêtement assez homogène de l'enveloppe du câble par les microbilles. Il présente aussi l'avantage de faire écouler les microbilles au-dessus du câble avec un débit adapté au câbles à la taille des microbilles . Ce dispositif présente encore l'avantage très important de constituer un réservoir de microbilles, celles-ci étant récupérées quand elles ne sont pas accrochées au câble par électricité statique. De telles microbilles sont coûteuses et le réservoir 3 permet de les récupérer. Ainsi non seulement elles ne sont pas perdues mais encore elles sont utilisées pour adhérer à la partie inférieure de l'enveloppe extérieure du câble.

Enfin, ce dispositif est démontable une fois, le câble posé dans la conduite, la partie supérieure 1 du réservoir 3 étant détachable de la partie inférieure 2 qui contient le reste de microbilles non utilisées et récupérables. Pour permettre au réservoir 3 de jouer son rôle de façon optimale, la transition 15 est en forme de tronc de cône dont le diamètre le plus petit est situé à l'intérieur du réservoir.

Ce dispositif selon l'invention permet de remplacer une intervention humaine aléatoire et coûteuse par un appareil mécanique simple et autonome, peu encombrant, permettant la distribution de microbilles isolantes en cours de tirage d'un câble dans une conduite. Ce dispositif, par exemple réalisé en métal, est robuste et bien adapté à des stockages et manipulations sur chantiers.

L'invention ne se limite évidemment pas aux modes de réalisation décrits et représentés. Elle comprend également tous les équivalents techniques des moyens décrits et leurs combinaisons effectuées suivant l'esprit de l'invention et mises en oeuvre dans le cadre des revendications qui suivent.

## REVENDICATIONS

1. Dispositif distributeur de microbilles pour le tirage d'un cable dans une conduite, placé à l'embouchure de la conduite et à travers laquelle va être tiré le câble, caractérisé en ce qu'il comporte un réservoir (3) composé de deux parties, supérieure (1) et inférieure (2), symétriques par rapport au plan horizontal passant par l'axe longitudinal ($\Delta$) du câble (20), et jointives au niveau de leurs bords horizontaux respectifs (4 et 5 ; 6 et 7), deux de ces bords (5 et 6) étant solidaires tandis que les deux autres bords (4 et 7) sont détachables, ce réservoir (3) comportant une première ouverture (11) située en regard de l'embouchure de la conduite (20) et dont le diamètre ($d_1$) est adapté à celui de la conduite et une deuxième ouverture (12) par laquelle entre le câble (21) et dont le diamètre ($d_2$) est adapté à celui du câble, et en ce que la partie supérieure (1) du réservoir (3) comporte un orifice (13) de diamètre variable, destiné à assurer le versement des microbilles (19) sur le câble (21) selon un débit déterminé.

2. Dispositif selon revendication 1, caractérisé en ce que le réservoir (3) présente deux transitions (14 et 15) aboutissant chacune respectivement à une des deux ouvertures (11 et 12).

3. Dispositif selon revendication 1 ou 2, caractérisé en ce que les deux bords (5 et 6) des deux parties (1 et 2) du réservoir (3) sont maintenus solidaires au moyen d'une articulation (8) et en ce que les deux autres bords (4 et 7) sont détachables au moyen d'une tirette (9) coulissant dans des encoches (10) pratiquées le long de la paroi extérieure des deux parties (1 et 2) du réservoir (3).

4. Dispositif selon l'une des revendications précédentes, caractérisé en ce que la partie supérieure (1) du réservoir (3) comporte, au niveau de l'orifice (13), une cornière (17) destinée à recevoir des rondelles trouées (16), dont le diamètre des trous est variable, et dont la forme est adaptée à une réserve (18) de microbilles (19).

5. Dispositif selon revendication 2, caractérisé en ce que le réservoir (3) est de forme cylindrique, de diamètre D supérieur à ceux ($d_1$ et $d_2$) des deux ouvertures (11 et 12) et en ce que les deux transitions (14 et 15) sont de forme tronconique.

6. Dispositif selon la revendication 5, caractérisé en ce que la transition (15) aboutissant à l'ouverture (12) est en forme de tronc de cône dont le diamètre le plus petit est situé à l'intérieur du réservoir.

7. Dispositif selon l'une des revendications précédentes, caractérisé en ce que les microbilles (19) et l'enveloppe extérieure du câble (21) sont en matériau isolant.

8. Dispositif selon l'une des revendications précédentes, caractérisé en ce que le réservoir (3) est en métal.

1/2

# FIG_1

# FIG_2

# FIG_3

Office européen
des brevets

**RAPPORT DE RECHERCHE EUROPEENNE**

**0167815**
Numero de la demande

EP    85 10 6870

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl.4) |
|---|---|---|---|
| A,D | FR-A-2 501 927   (NONCLERQ) <br> * Page 2, lignes 6-10, 22 et 23; figure 2 * <br><br> ----- | 1,7 | H 02 G    1/08 |

DOMAINES TECHNIQUES
RECHERCHES (Int. Cl.4)

H 02 G    1/00
G 02 B    6/00

Le présent rapport de recherche a été établi pour toutes les revendications

| Lieu de la recherche <br> LA HAYE | Date d'achèvement de la recherche <br> 09-09-1985 | Examinateur <br> LOMMEL A. |
|---|---|---|